# EUROPÄISCHE PATENTSCHRIFT

(11) **EP 1 419 977 B1**
(45) Veröffentlichungstag und Bekanntmachung des Hinweises auf die Patenterteilung: **20.07.2016**
(21) Anmeldenummer: 03025284.5
(22) Anmeldetag: 06.11.2003
(51) Int. Cl.: B65D 81/26, B65D 79/02, B65D 1/34

(54) **Nahrungsmittelverpackung, insbesondere Schale, mit elektronischem Etikett**
Food package, in particular a tray, with electronic tag
Emballage alimentaire, en particulier en forme de barquette, avec étiquette électronique

(30) Priorität: 15.11.2002 DE 10253567
(43) Veröffentlichungstag der Anmeldung: 19.05.2004
(73) Patentinhaber: LINPAC Packaging Limited, Featherstone Pontrefract West Yorkshire WF7 5DE (GB)
(72) Erfinder: Adamzyk, Norbert, 28209 Bremen (DE); Kögler, Joachim, 27616 Bokel (DE)
(74) Vertreter: Rummler, Felix

(56) Entgegenhaltungen:
- EP-A- 0 820 938
- WO-A-98/42488
- US-A- 4 702 377
- US-A- 5 428 346
- US-B1- 6 278 371

## Beschreibung

Die Erfindung betrifft ein Lagerungsmittel, insbesondere eine Schale, zur Lagerung von Nahrungs- und Genussmitteln, insbesondere Fleisch, Fisch und Geflügel, mit einem Grundkörper, auf dem Nahrungsmittel lagerbar sind. Die Erfindung betrifft weiter ein Verfahren zur Herstellung eines Lagerungsmittels aus zumindest zwei Materialbahnen.

Verderbliche Lebensmittel wie Fleisch, Fisch und Geflügel werden üblicherweise auf derartigen Lagerungsmitteln sowohl aufbewahrt, als auch an den Endkunden verkauft. Ein Großteil dieser Lagerungsmittel sind Schalen, es gibt aber auch einfache Platten, auf denen die Lebensmittel aufgelegt werden. Sowohl die Schalen, als auch die Platten werden regelmäßig mit einer Folie überzogen, um die Nahrungsmittel gegen äußere Einflüsse zu schützen und auf der Schale zu sichern.

In heutiger Zeit nimmt die Tendenz zu, dass Nahrungsmittel, die in Selbstbedienungsmärkten auf den eingangs genannten Lagerungsmitteln angeboten werden, gestohlen werden. Von Diebstählen sind also nicht mehr nur hochwertige Waren, wie Kleidung oder elektronische Geräte betroffen, sondern in steigendem Umfang auch Nahrungsmittel, insbesondere teure Nahrungsmittel wie insbesondere Fleisch.

Um diese höherwertigen Waren gegen Diebstähle zu sichern, sind im Stand der Technik eine Vielzahl von Diebstahlsicherungssystemen bekannt. Für Fleisch, Fisch oder ähnliche Waren gibt es aber keine entsprechenden Möglichkeiten, was damit zusammenhängen mag, dass es als unhygienisch empfunden wird, geeignete Vorrichtungen mit diesen Nahrungsmitteln in Kontakt zu bringen. Die Lagerungsmittel der eingangs genannte Art können also von Dieben leicht aus Supermärkten oder anderen Vertriebsstätten gestohlen werden.

Unabhängig von der Sicherung der Lagerungsmittel der eingangs genannten Art gegen Diebstahl wäre es wünschenswert, wenn einige wichtige Informationen über verderbliche Waren, beispielsweise ob beim Transport derselben oder während der Lagerung die Kühlkette unterbrochen wurde oder die Ware überlagert ist, ermitteln oder auslesen zu können, ohne die äußere Verpackung des Nahrungsmittels, d. h. das Lagerungsmittel samt Folie zerstören zu müssen.

Aus der WO 98/42488 und der EP 0820938 sind Lagerungsmittel gemäß dem Oberbegriff von Anspruch 1 bekannt.

Ausgehend vom Vorstehenden ergibt sich daher für die vorliegende Erfindung die Aufgabe, ein vorteilhaft herzustellendes Lagerungsmittel sowie ein Verfahren zur Herstellung desselben der eingangs genannt Art zu schaffen, das gegen Diebstahl weitestgehend geschützt ist. Darüber hinaus ergibt sich die Aufgabe, ein Lagerungsmittel zu schaffen, dass zusätzliche Informationen über das zu lagernde Nahrungsmitteln liefern kann.

Erfindungsgemäß wird ein Lagerungsmittel gemäß Anspruch 1 geschaffen, bei dem der Grundkörper ein mit demselben dauerhaft verbundenes Kennzeichnungsmittel aufweist, wobei das Kennzeichnungsmittel so ausgebildet ist, dass es mit einer separaten, elektronischen Diebstahldetektions- und/oder Informationsauslesevorrichtung berührungslos in Wechselwirkung treten kann.

Wenn also das Lagerungsmittel samt dem Nahrungsmittel unerlaubterweise an der Kasse eines Supermarktes vorbeigeschleust wird, kann eine Detektionsvorrichtung einen entsprechenden Alarm auslösen, beispielsweise durch einen Signalton oder auch ein verdecktes Signal.

Das Kennzeichnungsmittel ist mit dem Lagerungselement verliersicher verbunden, damit ein potentieller Dieb die Kennzeichnung nicht vor dem Durchqueren der Diebstahldetektionsvorrichtung entfernen kann. Das Kennzeichnungsmittel kann neben seiner Funktion als mittelbar Alarm auslösendes Mittel alternativ oder zusätzlich von einer Informationsauslesevorrichtung auslesbare Informationen aufnehmen, vorzugsweise Informationen über das Nahrungs- und/oder Genussmittel wie Eigenschaften und/oder Herkunftsangaben desselben, das Haltbarkeitsdatum der gelagerten Nahrungs- und/oder Genussmittel, über eine Unterbrechung der Kühlkette der Nahrungsmittel, über das Gewicht der Nahrungsmittel, deren Preis oder ähnliches. Die Informationen können kodiert auf dem Kennzeichnungsmittel aufgebracht sein. Auch hierfür gibt es eine Vielzahl von Mäglichkeiten, die Informationen so auf dem Kennzeichnungsmittel aufzubringen, dass sie berührungslos von der Informationsauslesevorrichtung gelesen werden können.

Zum berührungslosen Auslesen des Kennzeichnungsmittels bzw. zum berührungslosen Detektieren eines Diebstahl mit Hilfe des Kennzeichnungsmittels bieten sich Diebstahldetektions- und/oder Informationsauslesevorrichtungen an, die mit elektromagnetischen Wellen oder Magnetfeldern arbeiten bzw. Schwingungen eines Teils des Kennzeichnungsmittels erzeugen und erfassen.

Was die Lage des Kennzeichnungsmittels angeht, so kann dies zumindest teilweise in einer Außenwandung des Grundkörpers eingebettet sein. Dies bietet sich insbesondere dann an, wenn das Lagerungsmittel einschichtig aufgebaut ist. Das Kennzeichnungsmittel kann dann von dem Grundkörper vollständig umschlossen sein, so dass ein Grundkörper eingebettet ist oder auch nur zum Teil. Dabei ist es zweckmäßig, wenn das Kennzeichnungsmittel zumindest bündig mit der Außenwandung des Grundkörpers abschließt. Wenn das Kennzeichnungsmittel von außen zu erkennen ist, ist es vorteilhaft, wenn zumindest die Randbereiche der Oberfläche des Kennzeichnungsmittels, die bündig mit der Außenwandung abschließt, von dem Grundkörper überdeckt werden, so dass ein Herauslösen des Kennzeichnungsmittels aus dem Grundkörper schwierig oder unmöglich wird. Um hygienische Probleme zu vermeiden, sollte das Kennzeichnungsmittel, insofern es nicht vollständig von dem Grundkörper eingeschlossen ist, nicht auf der Seite herausragen oder bündig abschließen, auf die Nahrungsmittel gelegt wird, sondern auf der entgegengesetzten Außenseite.

Gemäß der vorliegenden Erfindung ist der Grundkörper mehrschichtig aufgebaut, wobei das Kennzeichnungsmittel zwischen zwei Schichten angeordnet ist. Das Kennzeichnungsmittel befindet sich also im Inneren des Lagerungsmittels, was es für einen Dieb vollständig unmöglich macht, das Kennzeichnungsmittel zu entfernen, bevor er mit dem Lagerungsmittel durch eine Diebstahldetektionsvorrichtung geht. Außerdem ist das im Inneren des Lagerungsmittels eingebettete Kennzeichnungsmittel unsichtbar. Dabei kann zumindest eine der Schichten aus Kunststoff, insbesondere offenzelligem Schaumstoff gebildet sein.

In einer weiteren vorteilhaften Ausführungsform der Erfindung ist der Grundkörper eine Schale, die eine Grundwand und Längs- und Querseitenwände aufweist, wobei die Grundwand zumindest zwei Schichten aufweist und wobei im Randbereich der den Nahrungsmitteln zugewandten Schicht der Grundwand Löcher ausgebildet sind, damit Flüssigkeit aus dem verpackten Gut, z. B. Fleisch, in das innere der Schale fließen und dort aufgesogen werden kann und wobei das Kennzeichnungsmittel zwischen den Schichten im mittigen Bereich ohne Löcher angeordnet ist.

Gemäß der vorliegenden Erfindung wird auch ein Verfahren zur Herstellung eines Lagerungsmittel gemäß Anspruch 7 geschaffen, bei dem die erste Bahn vor dem Verbinden mit der zweiten Bahn mit Kennzeichnungsmitteln versehen wird, die mit einer separaten, elektronischen Diebstahldetektions- und/oder Informationsauslesevorrichtung berührungslos in Wechselwirkung treten können, wobei die Kennzeichnungsmittelauf der Seite der ersten Bahn angeordnet werden, die nach dem Verbinden an der zweiten Bahn anliegt, so dass das Kennzeichnungsmittel nach dem Verbinden der Bahnen zwischen diesen eingebettet vollständig im Inneren des Lagerungsmittels, insbesondere einer Schale, angeordnet ist. Dabei können die Kennzeichnungsmittel auf die erste Bahn aufgeklebt werden.

Um aus jeweils einer Materialbahn eine Mehrzahl von Lagerungsmitteln herstellen zu können, kann vorteilhafterweise vorgesehen werden, dass auf der ersten Materialbahn eine Mehrzahl von Kennzeichnungsmitteln in Längsrichtung der Bahn hintereinander und in Querrichtung nebeneinander aufgebracht werden, so dass aus Mäterialbahnabschnitt sowohl in Längs- als auch in Querrichtung eine Mehrzahl von Lagerungsmitteln herstellbar ist.

Weitere Merkmale der vorliegenden Erfindung ergeben sich aus der nachfolgenden Beschreibung von bevorzugten Ausführungsbeispielen der Erfindung und aus den Figuren der Zeichnung.

Es zeigen:
- Fig. 1: eine Draufsicht auf eine erfindungsgemäße Schale;
- Fig. 2: einen Längsschnitt II-II durch die Schale;
- Fig. 3: eine schematische Ansicht einer Vorrichtung zur Herstellung der Schale und
- Fig. 4: einen vergrößerten Ausschnitt IV aus der Darstellung gemäß Fig. 3.

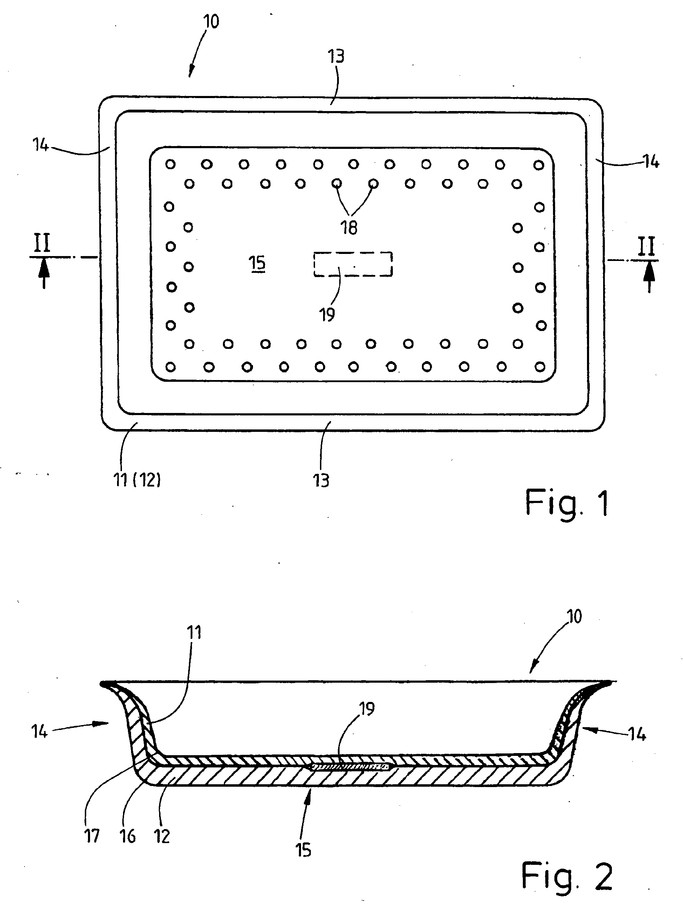

Die Figuren 1 und 2 zeigen eine rechteckige Schale 10. Diese besteht aus zwei Schichten, nämlich einer oberen Lage 11 und einer unteren Lage 12. Beide Lagen 11 und 12 sind vorzugsweise aus geschäumtem Kunststoff, beispielsweise Polystyrol, gebildet. Die obere Lage 11 besteht aus offenzelligem und damit saugfähigen Schaumkunststoff. Die untere Lage 12 besteht dagegen aus geschlossenzelligem Schaumkunststoff. An den Außenseiten der Lagen 11 und 12 sind bedingt durch den Extrusionsprozess bei der Herstellung wasserundurchlässige, folienartige Lagen 16 und 17 vorhanden.

In der Bodenwand 15 sind in der wasserundurchlässigen Lage 17 eine Mehrzahl von Öffnungen 18 ausgebildet, die sich bis in die geschäumte Lage 11 hinein erstrecken. Diese Öffnungen 18 sind im vorliegenden Ausführungsbeispiel gleichmäßig auf die Bodenwand 15 verteilt, und zwar in jeweils zwei parallelen Reihen, die in seitlichen Bereichen längs und quer der Schale 10 verlaufen. Ein zentraler, mittiger Bereich der Bodenwand 15 ist von Öffnungen 18 freigelassen. Diese Öffnungen 18 dienen zur Aufnahme der von Nahrungsmitteln abgesonderten Flüssigkeit, wobei die Flüssigkeit in die saugfähige Lage 11 geleitet wird und dort verbleibt.

Wesentlich ist nun, dass zwischen den beiden Lagen 11 und 12 ein flaches, zum Beispiel rechteckiges Kennzeichnungsmittel 19 eingebettet ist. Das Kennzeichnungsmittel 19 kann nach Art eines Chips zur Datenspeicherung ausgebildet sein. Dieses Kennzeichnungsmittel 19 ist im mittleren Bereich der Schale angeordnet, d. h. in einem Bereich ohne Öffnungen 18. Damit ist gewährleistet, dass die Funktion des Kennzeichnungsmittels 19 durch abgesonderte Nahrungsmittelflüssigkeit nicht beeinträchtigt wird.

Das Kennzeichnungsmittel 19 kann zum einen, und zwar bevorzugt, dazu dienen, von einer Diebstahldetektionsvorrichtung erkannt zu werden. Zum anderen kann das Kennzeichnungsmittel 19 aufgrund seiner Eigenschaft, Daten zu speichern, als Informationsträger, sogar als Transponder, dienen, beispielsweise zur zusätzlichen Überwachung des Haltbarkeitsdatums des Nahrungsmittels und/oder zur Überwachung, ob die Kühlkette des Nahrungsmittels unterbrochen wurde. Daneben sind natürlich noch eine Vielzähl von anderen Informationen denkbar, die auf dem Kennzeichnungsmittel gespeiehert werden können, wie etwa die jeweilige EAN Eigenschaften und/oder Herkunftsangaben des Nahrungsmittels. Das Kennzeichnungsmittel 19 ist dazu als Datenspeicher ausgebildet.

Das flache Kennzeichnungsmittel 19 ist vorzugsweise nach Art eines Klebeetiketts ausgebildet, nämlich auf die zur benachbarten Lage weisende Seite einer Lage 11 oder 12 aufgeklebt. Das Kennzeichnungsmittel 19 arbeitet vorzugsweise akustisch-magnetisch.

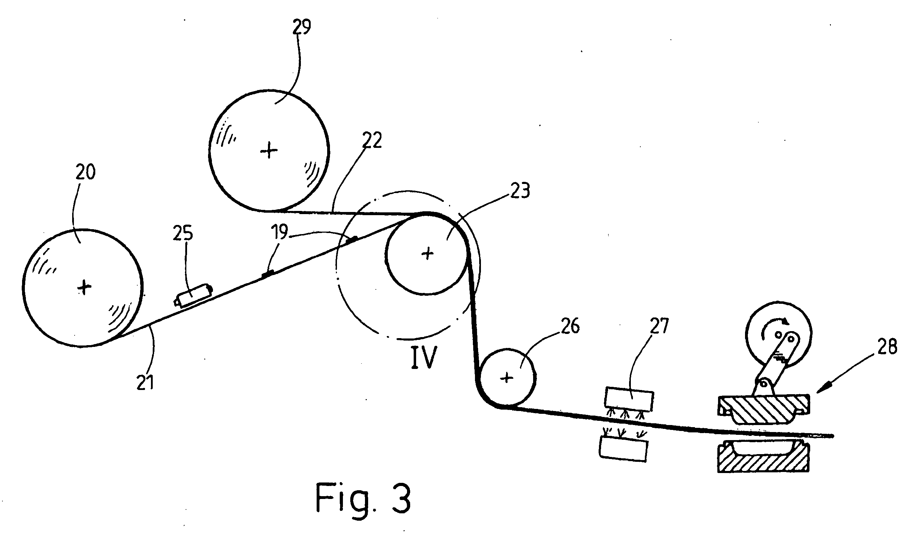

Fig. 3 zeigt schematisch eine Vorrichtung zur Herstellung der Schale 10 gemäß der Erfindung. Auf zwei Bobinen 20, 29 sind zwei Schaumkunststoffbahnen 21, 22 für die untere Lage 12 bzw. die obere Lage 11 aufgewickelt. An einer Umlenkrolle 23 werden die beiden Bahnen 21, 22 zusammengeführt. Vor dem Zusammenführen werden auf die untere Bahn 21 zur Bildung der Lage 12 Kennzeichnungsmittel 19 über eine entsprechende Auflegevorrichtung 25 aufgeklebt. Wichtig ist noch, dass, wie in Fig. 3 zu sehen ist, die Kennzeichnungsmittel 19 in einer Reihe mit gleichmäßigem Abstand hintereinander auf die untere Bahn 21 aufgebracht werden. Zusätzlich können auch in Bahnenquerrichtung mehrere Kennzeichnungsmittel 19 aufgeklebt werden.

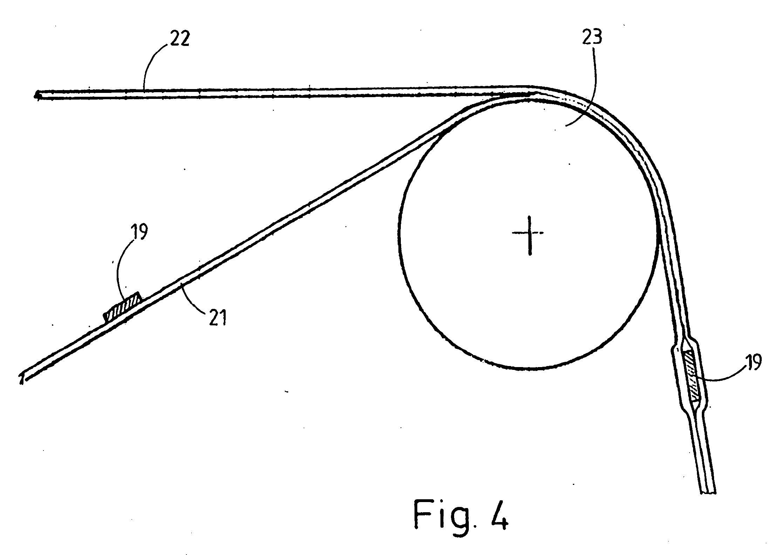

Über eine weitere Umlenkrolle 26 werden die aneinander liegenden Bahnen 21 und 22 zusammen durch eine Heizvorrichtung 27 geführt. Durch das Heizen werden die beiden Bahnen 21 und 22 miteinander verbunden, und der Schaumkunststoff der Bahnen 21 und 22 expandiert. Die Wirkung dessen ist gut durch Vergleich der Figuren 2 und 4 zu erkennen.

Bei der Schale 10 in Fig. 2 wird deutlich, dass die Oberseite der oberen Schicht 11 und die Unterseite der unteren Schicht 12 nach dem Expansionsprozess geradlinig verlaufen, während bei der Herstellung vor der Expansion, wie in Fig. 4 zu sehen ist, durch das Einbringen des Kennzeichnungsmittels 19 die beiden entsprechenden Bahnen 21, 22 an der Position des Kennzeichnungsmittels 19 zunächst Außenwölbungen, aufweisen. Diese Außenwölbungen werden bei der anschließenden Expansion des Schaumkunststoffs beider Bahnen 21, 22 durch die Expansion und die damit einhergehende Verdickung der Bahnen 21 und 22 wieder rückgängig gemacht, so dass die Außenseiten der Bahnen 21 und 22 auch in den Bereichen der dünnen Kennzeichnungsmittel 19 anschließende keine Außenwölbungen mehr aufweisen und somit die Kennzeichnungsmittel 19 praktisch unsichtbar zwischen den Bahnen 21 und 22 zur Bildung der Schichten 11 und 12 eingebettet sind.

Von der Heizvorrichtung 27 aus werden die Bahnen 21 und 22 aus denen die Schichten 11, 12 gebildet werden, einer angedeuteten Tiefziehvorrichtung 28 zugeführt, in der Schalen 10 aus den Bahnen 21 und 22 geformt werden. Gleichzeltig erfolgt in der Tiefziehvorrichtung 28 ein Besäumen der fertigen Schalen 10, wodurch die fertigen Schalen 10 aus den Bahnen 21, 22 abgetrennt werden, und zwar so, dass die Kennzeichnungsmittel 19 möglichst mittig im von Öffnungen 18 freigelassenen mittleren Bereichen der Bodenwände 15 liegen.

Nach dem Tiefziehen oder auch während des Tiefziehens der Bahnen werden über eine Stanzvorrichtung die in Fig. 1 gezeigten Öffnungen 18 in die Bodenwandungen 15 der jeweiligen Schalen eingestanzt.

Natürlich sind eine Vielzahl von anderen Ausführungen einer Vorrichtungen zur Herstellung der erfindungsgemäßen Schalen mit Kennzeichnungsmitteln möglich.

### Bezugszeichenliste:

- 10: Schale
- 11: obere Lage
- 12: untere Lage
- 13: Längsseitenrand
- 14: Querseitenrand
- 15: Bodenwand
- 16: wasserdurchlässige Lage
- 17: wasserundurchlässige Lage
- 18: Öffnung
- 19: Kennzeichnungsmittel
- 20: Bobine
- 21: Kunststoffbahn
- 22: Kunststoffbahn
- 23: Umlenkrolle
- 25: Auflegevorrichtung
- 26: Umlenkrolle
- 27: Heizvorrichtung
- 28: Tiefziehvorrichtung
- 29: Bobine

## Patentansprüche

1. Lagerungsmittel, insbesondere Schale, zur Aufnahme von Nahrungs- bzw. Genussmitteln, insbesondere Fleisch, Fisch und Geflügel, mit einem Grundkörper (10), auf dem Nahrungsmittel lagerbar sind, wobei der Grundkörper (10) mindestens ein mit demselben dauerhaft verbundenes Kennzeichnungsmittel (19) aufweist, wobei das Kennzeichnungsmittel (19) so ausgebildet ist, dass es mit einer separaten, elektronischen Diebstahldetektions- und/oder Informationsauslesevorrichtung berührungslos in Wechselwirkung treten kann, **dadurch gekennzeichnet, dass** der Grundkörper (10) mehrschichtig aufgebaut ist, wobei das Kennzeichnungsmittel (19) zwischen zwei Schichten (11, 12) angeordnet, vorzugsweise vollständig eingebettet ist.

2. Lagerungsmittel nach Anspruch 1, **dadurch gekennzeichnet, dass** das Kennzeichnungsmittel (19) von der Informationsauslesevorrichtung auslesbare Informationen trägt, vorzugsweise Informationen über Produktinformationen der gelagerten Nahrungs- und/oder Genussmittel, das Haltbarkeitsdatum der gelagerten Nahrungs- und/oder Genussmittel, über eine Unterbrechung der Kühlkette der Nahrungsmittel, über das Gewicht der Nahrungsmittel, deren Preis oder dergleichen.

3. Lagerungsmittel nach Anspruch 1, **dadurch gekennzeichnet, dass** das Kennzeichnungsmittel (19) als Datumspeicher ausgebildet ist.

4. Lagerungsmittel nach Anspruch 1, **dadurch gekennzeichnet, dass** das Kennzeichnungsmittel (19) zumindest teilweise in eine Außenwandung des Grundkörpers (10) eingebettet ist.

5. Lagerungsmittel nach Anspruch 1, **dadurch gekennzeichnet, dass** die Schichten (11, 12) aus Schaumkunststoff gebildet sind, wobei vorzugsweise die obere Schicht (11) aus flüssigkeitsabsorbierendem, offenzelligem Schaumkunststoff besteht.

6. Lagerungsmittel nach Anspruch 1, **dadurch gekennzeichnet, dass** das Grundkörper (10) eine Schale (10) ist, die eine Bodenwand (15), Längs- (13) und Querseitenwänden (14) aufweist, wobei die Bodenwand (15) zumindest zwei Schichten (11, 12) aufweist, wobei im Randbereich der den Nahrungsmitteln zugewandten Schicht (11) der Bodenwand (15) Öffnungen (18) ausgebildet sind, damit die Flüssigkeit in das Innere der Schale (10) fließen kann und wobei das Kennzeichnungsmittel (19) zwischen den Schichten (11, 12) in einem Bereich ohne Öffnungen (18) angeordnet ist, vorzugsweise in einem ungelochten mittleren Bereich der Bodenwand (15).

7. Verfahren zur Herstellung eines Lagerungsmittels aus zumindest zwei Materialbahnen, gemäss einem oder mehreren der obigen Ansprüche, bei dem die zwei Materialbahnen (21, 22) vorzugsweise durch Kleben, Schweißen und/oder Heißsiegeln miteinander verbunden werden, **dadurch gekennzeichnet, dass** die erste Bahn (21) vor dem Verbinden mit der zweiten Bahn (22) mit Kennzeichnungsmitteln (19) versehen wird, die mit einer separaten, elektronischen Diebstahldetektions- und/oder Informationsauslesevorrichtung berührungslos in Wechselwirkung treten können, wobei die Kennzeichnungsmittel (19) auf der Seite der ersten Bahn angeordnet werden, die nach dem Verbinden an der zweiten Bahn (22) anliegt, so dass das Kennzeichnungsmittel (19) nach dem Verbinden der Bahnen (21, 22) zwischen denselben eingebettet angeordnet ist.

8. Verfahren nach Anspruch 7, **dadurch gekennzeichnet, dass** die Kennzeichnungsmittel (19) auf die erste Bahn (21), vorzugsweise fortlaufend aufgeklebt werden.

9. Verfahren nach Anspruch 7, **dadurch gekennzeichnet, dass** auf der ersten Materialbahn (21) eine Mehrzahl von voneinander beabstandeten Kennzeichnungsmitteln (19) in Längsrichtung der Bahn (21) hintereinander folgend und/oder in Querrichtung nebeneinander folgend aufgebracht werden, so dass pro Materialbahnabschnitt in Längs- und/oder in Querrichtung eine Mehrzahl von Lagerungsmitteln herstellbar ist.

## Claims

1. A storage means, in particular a tray, for receiving food and/or luxury food, in particular meat, fish and poultry, with a base body (10) on which food can be stored, wherein the base body (10) has at least one identification means (19) permanently connected thereon, wherein the identification means (19) is configured such that it is able to interact in a contactless manner with a separate electronic theft detection device and/or information reading device, **characterized in that** the base body (10) is constructed in a multilayered manner, wherein the identification means (19) is arranged, preferably completely embedded, between two layers (11, 12).

2. The storage means according to claim 1, **characterized in that** the identification means (19) carries information that can be read out by the information reading device, preferably information on product information of the stored food and/or luxury food, the best-before-date of the stored food and/or luxury food, on interruption of the cold chain of the food, on the weight of the food, the price thereof or the like.

3. The storage means according to claim 1, **characterized in that** the identification means (19) is configured as data memory.

4. The storage according to claim 1, **characterized in that** the identification means (19) is at least partially embedded in an outer wall of the base body (10).

5. The storage means according to claim 1, **characterized in that** the layers (11, 12) are formed from foamed plastics, wherein the top layer (11) is preferably composed of liquid-absorbing open-cell foam plastics.

6. The storage means according to claim 1, **characterized in that** the base body (10) is a tray (10) that has a bottom wall (15), longitudinal side walls (13) and transverse side walls (14), wherein the bottom wall (15) has at least two layers (11, 12), wherein in the edge region of the layer (11) of the bottom wall (15) facing the food, there are openings (18) formed therein so that the liquid can flow into the interior of the tray (10), and wherein the identification means (19) is arranged between the layers (11, 12) in a region without openings (18), preferably in an unperforated central region of the bottom wall (15).

7. A method for producing a storage means from at least two material webs according to one or more of the preceding claims, wherein the two material webs (21, 22) are preferably connected to one another by glueing, welding and/or heat sealing, **characterized in that** prior to connecting to the second web (22), the first web (21) is provided with identification means (19) which can interact in a contactless manner with a separate electronic theft detection device and/or information reading device, wherein the identification means (19) are arranged on the side of the first web which, after connecting, engages on the second web (22) so that after connecting of the webs (21, 22), the identification means (19) is arranged embedded therebetween.

8. The method according to claim 7, **characterized in that** the identification means (19) are preferably continuously glued onto the first web (21).

9. The method according to claim 7, **characterized in that** a plurality of identification means (19) that are spaced apart from one another are applied on the first material web (21) successively one behind the other in the longitudinal direction of the web (21) and/or successively next to one another in the transverse direction so that a plurality of storage means can be produced per each material web portion in the longitudinal and/or transverse direction.

## Revendications

1. Moyen de conservation, notamment barquette destinée à recevoir des produits alimentaires et des produits d'agrément, notamment de la viande, du poisson et de la volaille, avec un corps de base (10), sur lequel des produits alimentaires peuvent être conservés, le corps de base (10) comportant au moins un moyen d'identification (19) assemblé durablement avec celui-ci, le moyen d'identification (19) étant conçu de sorte à pouvoir entrer en interaction sans contact avec un dispositif électronique séparé de détection antivol et/ou de lecture d'informations, **caractérisé en ce que** le corps de base (10) est structuré en plusieurs couches, le moyen d'identification (19) étant placé, de préférence totalement incorporé entre deux couches (11, 12).

2. Moyen de conservation selon la revendication 1, **caractérisé en ce que** le moyen d'identification (19) porte des informations lisibles par le dispositif de lecture d'informations, de préférence des informations concernant les produits alimentaires et/ou les produits d'agrément conservés, la date de péremption des produits alimentaires et/ou produits d'agrément conservés, une interruption de la chaîne du froid des produits alimentaires, le poids des produits alimentaire, leur prix ou similaires.

3. Moyen de conservation selon la revendication 1, **caractérisé en ce que** le moyen d'identification (19) est conçu en tant que mémoire de données.

4. Moyen de conservation selon la revendication 1, **caractérisé en ce que** le moyen d'identification (19) est incorporé au moins en partie dans une paroi extérieure du corps de base (10).

5. Moyen de conservation selon la revendication 1, **caractérisé en ce que** les couches (11, 12) sont conçues en mousse synthétique, de préférence la couche (11) supérieure étant constituée d'une mousse synthétique à alvéoles ouvertes, absorbant les liquides.

6. Moyen de conservation selon la revendication 1, **caractérisé en ce que** le corps de base (10) est une barquette (10) qui comporte une paroi de fond (15), des parois de côtés longitudinaux (13) et des parois de côtés transversaux (14), la paroi de fond (15) comportant au moins deux couches (11, 12), dans la zone de bordure de la couche (11) de la paroi de fond (15) qui fait face aux produits alimentaires étant conçus des orifices (18), pour que le liquide puisse s'écouler à l'intérieur de la barquette (10) et le moyen d'identification (19) étant placé entre les couches (11, 12), dans une zone exempte d'orifices (18), de préférence dans une zone centrale non perforée de la paroi de fond (15).

7. Procédé destiné à fabriquer un moyen de conservation à partir d'au moins deux bandes de matière selon l'une quelconque ou plusieurs des revendications précédentes, lors duquel on assemble l'une à l'autre les deux bandes de matière (21, 22), de préférence par collage, par soudage et/ou par thermoscellage, **caractérisé en ce qu'**avant de l'assembler avec la deuxième bande (22), on munit la première bande (21) de moyens d'identification (19) qui sont capables d'entrer en interaction sans contact avec un dispositif électronique séparé de détection antivol et/ou de lecture d'informations, sachant qu'on place les moyens d'identification (19) sur le côté de la première bande qui après assemblage est adjacent à la deuxième bande (22), de sorte qu'après l'assemblage des bandes (21, 22), le moyen d'identification (19) soit placé en étant incorporé entre ces dernières.

8. Procédé selon la revendication 7, **caractérisé en ce qu'**on colle les moyens d'identification (19) sur la première bande (21), de préférence en continu.

9. Procédé selon la revendication 7, **caractérisé en ce que** sur la première bande de matière (21), on applique une pluralité de moyens d'identification (19) écartés les uns des autres, successivement les uns derrière les autres en direction longitudinale de la bande (21) et/ou successivement côte à côte en direction transversale, de sorte que par section de bande de matière en direction longitudinale et/ou transversale, une pluralité de moyens de stockage puisse être fabriquée.
